# FASCICULE DE BREVET EUROPEEN

(11) **EP 3 807 021 B1**
(45) Date de publication et mention de la délivrance du brevet: **13.08.2025**
(21) Numéro de dépôt: 19790596.1
(22) Date de dépôt: 11.06.2019
(51) Int. Cl.: B65G 47/82, B07C 5/36

(54) **INSTALLATION DE SELECTION D'OBJETS DEFILANT SUR UNE LIGNE DE TRANSFERT**
AUSWAHLSYSTEM FÜR EINLANG EINES FÖRDERBANDS TRANSPORTIERTER OBJEKTE
SYSTEM FOR SELECTING OBJECTS MOVING ALONG A TRANSFER LINE

(30) Priorité: 12.06.2018 FR 1855113
(43) Date de publication de la demande: 21.04.2021
(73) Titulaire: Protection-Décoration-Conditionnement- P.D.C. Europe, 80500 Montdidier (FR)
(72) Inventeur: VANDEVOORDE, Derek, 80500 Rollot (FR)
(74) Mandataire: Herrburger, Pierre
(86) Numéro de dépôt international: PCT/FR2019/051399
(87) Numéro de publication internationale: WO 2019/239052

(56) Documents cités:
- DE-A1- 3 241 100
- FR-A1- 2 796 630

## Description

### Domaine de l'invention

L'invention a pour objet une installation de sélection d'objets défilant sur une ligne de transfert constituée par une bande sans fin entre une entrée d'objets et une sortie d'objets, acceptés, avec rejet d'objets non conformes dans la zone d'éjection.

Les objets défilant sur la ligne de transfert sont des objets venant par exemple d'une phase de fabrication et de conditionnement pour être contrôlés et être utilisés pour une nouvelle opération ou être conditionnés.

Ces objets peuvent avoir des formes très différentes correspondant à leur emballage tel qu'un récipient, une barquette, une bouteille, un flacon et le critère de sélection est un critère auquel doit répondre l'objet passant dans l'installation, c'est-à-dire par exemple le niveau de remplissage d'un flacon ou d'une bouteille, le poids de l'objet conditionné, la présence d'un élément apparent sur l'objet tel qu'une étiquette ou d'un élément de fermeture tel qu'un bouchon ; le critère peut également être une qualité de transparence correspondant à un bon ou mauvais nettoyage d'un récipient encore vide tel qu'une bouteille entrant dans un poste de remplissage.

### Etat de la technique

Il existe différentes installations de sélection d'objets permettant de contrôler les objets sur une ligne de défilement et d'évacuer les objets qui ne sont pas conformes. Ces installations connues utilisent soit des moyens mécaniques soit des moyens pneumatiques pour évacuer l'objet non conforme. Les moyens mécaniques sont en général constitués par un poussoir qui agit transversalement sur l'objet défilant dans la zone d'évacuation. Ce poussoir est commandé par un moyen hydraulique ou pneumatique tel qu'un vérin, ou un moyen électromécanique tel qu'un vérin électromagnétique.

Il existe également pour les petits objets ou les objets légers, des éjecteurs constitués par une soufflette qui dirige un jet d'air pour évacuer l'objet qui se trouve sur la ligne de défilement dans le poste d'évacuation.

Les éjecteurs par jet d'air sont limités à des objets ou des produits très particuliers et suffisamment légers pour pouvoir être éjectés de cette manière.

Les éjecteurs les plus usuels sont des éjecteurs mécaniques commandés par un actionneur pneumatique, hydraulique ou électromagnétique. Ces éjecteurs doivent fonctionner très rapidement pour ne pas gêner ou déranger le produit suivant dans la ligne de défilement. Cela suppose une action relativement brutale pour être efficace et rapide.

Ces dispositifs d'évacuation sont en général relativement encombrants et ne ménageant pas les objets évacués ; dans le cas d'objets fragiles tels que des bouteilles, ils risquent de casser les bouteilles, ce qui n'est pas toujours approprié car ces récipients, d'une part, pourraient être récupérés et d'autre part, leur casse crée des morceaux qui peuvent encombrer la ligne de défilement, suivant l'endroit où l'objet est rencontré par l'éjecteur et être source d'incidents de fonctionnement.
« Il est connu selon le document DE 3241100 de dévier des paquets (P) d'un convoyeur par une installation d'aiguillage vers une direction perpendiculaire à la direction du convoyeur. Cette installation se compose d'une tôle de guidage (70) et d'un rouleau vertical de guidage (60) ainsi que d'un rouleau horizontal d'entraînement (50) qui prend en charge le paquet (P1) pour le conduire sur le convoyeur de la déviation. Le mouvement de déviation de l'aiguillage est amorcé par le contact d'un rouleau (35) porté par un organe déviateur (30) en forme de bras qui s'appuie et roule sur le côté du paquet (P1) à dévier, pour le diriger dans les organes de l'aiguillage (70, 60, 50a).
Une telle installation ne peut s'appliquer qu'à des paquets de forme rectangulaire, offrant une surface de contact avec le rouleau (35) permettant le changement de direction du paquet par l'accompagnement assuré par l'organe déviateur (30) et son rouleau (35).
Une telle installation ne permet pas d'appliquer une impulsion pour éjecter un objet de section quelconque transporté par un convoyeur. »

### But de l'invention

La présente invention a pour but de développer une installation de sélection d'objets défilant sur une ligne de transfert, qui soit efficace, rapide et permette d'évacuer de façon ménagée les objets non conformes sans perturber le défilement des objets en amont et en aval et qui puisse s'adapter à une grande diversité de formes et de dimensions des objets contrôlés.

### Exposé et avantages de l'invention

A cet effet, la présente invention a pour objet une installation de sélection d'objets défilant sur une ligne de transfert constituée par une bande sans fin entre une entrée d'objets et une sortie d'objets, acceptés, avec rejet d'objets non conformes dans la zone d'évacuation comprenant : un dispositif éjecteur à bras pivotants dont la trajectoire chevauche la trajectoire des objet, installation caractérisée en ce que le dispositif éjecteur est formé : de deux bras pivotants, entraînés, dont la trajectoire de rotation chevauche la ligne de défilement des objets dans la zone d'évacuation, les deux bras étant diamétralement opposés, terminés chacun par une surface d'appui bombée ; le sens de rotation du bras dans la zone d'évacuation correspond à la direction de défilement des objets avec une composante de vitesse dans cette direction au moins égale à la vitesse de défilement et une composante transversale pour évacuer l'objet, pour accompagner rapidement et avec ménagement l'objet à évacuer sans perturber l'objet en amont par la poussée de l'objet à évacuer ni l'objet en aval par sa rencontre avec le bras pivotant le bras entraîné recevant un signal de commande de l'objet à éjecter pour impacter cet objet qui arrive dans la zone d'évacuation et l'évacuer de la ligne de défilement.

Cette forme équilibrée du dispositif éjecteur permet un fonctionnement très efficace puisque le bras n'a qu'un demi-tour à effectuer pour sa course active entre la rencontre avec l'objet à évacuer et sa venue en position de repos ; ce mouvement se traduit par le mouvement alterné de l'autre bras qui passe de la position de repos à la position d'attente, proche de la zone d'éjection de sorte qu'il pourra à son tour évacuer très rapidement un nouvel objet également défectueux et en particulier l'objet qui suit directement en aval l'objet qui vient d'être évacué.

Ce dispositif d'éjection, équilibré, fonctionnant par des mouvements de rotation, a très peu d'inertie et surtout il économise en quelque sorte le temps de retour en position de repos puisqu'en fin de phase d'évacuation, le bras diamétralement opposé est déjà en position d'attente, prêt à un nouveau mouvement d'évacuation.

Suivant une autre caractéristique, chaque bras est composé d'un organe d'éjection fixé à un support porté par l'axe, l'organe d'éjection étant fixé par une extrémité au support, l'autre extrémité ayant une surface d'appui bombée.

Cette forme de réalisation est particulièrement efficace car elle permet d'une part, de réaliser l'organe d'éjection en une matière plastique, éventuellement sans frottement comme du PTFE de manière à faciliter le contact avec l'objet à évacuer et permettre d'accompagner celui-ci dans la zone d'évacuation.

Suivant une autre caractéristique avantageuse, l'organe d'éjection est une pièce en matière plastique, notamment en PTFE.

### Dessins

La présente invention sera décrite ci-après de manière plus détaillée à l'aide d'un mode de réalisation d'une installation de sélection d'objets représentée dans les dessins annexés dans lesquels :
- la figure 1 est une vue de dessus schématique de l'installation de sélection,
- la figure 2 est une vue schématique de dessus d'un mode de réalisation de l'installation de sélection au niveau du bras tournant,
- la figure 3, dans ses parties 3A, 3B, montre un détail en vue de dessus du dispositif d'évacuation,
- la figure 3A montre l'application du dispositif à trois objets de dimensions différentes figurés par des cercles de tailles différentes,
- la figure 3B montre schématiquement le mouvement d'éjection par le contact du bras avec l'objet.

### Description d'un mode de réalisation de l'invention

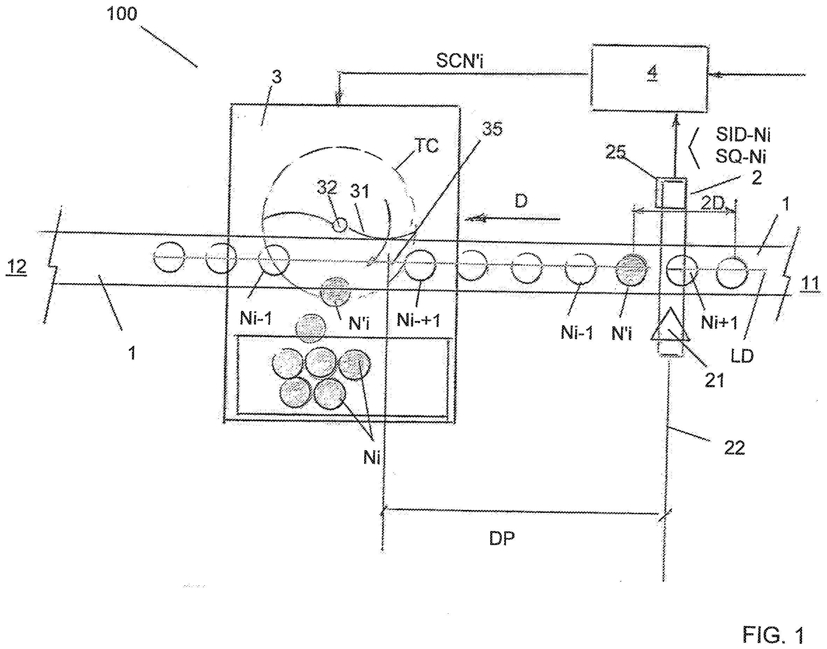

La figure 1 montre une installation de sélection 100 d'objets Ni défilant sur une ligne de défilement LD entre une entrée 11 par laquelle arrivent des objets Ni et une sortie 12 d'objets sélectionnés car conformes à un certain critère. Les objets non conformes N'i sont éjectés de la ligne de défilement LD dans le réceptacle 13.

Les objets schématisés par des ronds Ni sont posés librement sur une bande transporteuse 1 entraînée dans la direction D à la vitesse V, de préférence constante en régime permanent, en dehors des phases de démarrage et de ralentissement.

Les objets Ni sont en principe des objets d'une série de même forme, par exemple des objets de forme cylindrique circulaire, de forme de révolution ou parallélépipédique ou cubique tels que des bouteilles, des flacons, des récipients, des boîtes, des barquettes, transparents ou opaques.

Les objets Ni doivent répondre à un critère de conformité qui peut être la forme ou le contenu de l'objet si celui-ci est un récipient, une bouteille, un flacon. Le critère de conformité constaté sur la ligne de défilement LD est la forme (silhouette), les dimensions, le poids, le bon remplissage d'un récipient ou d'une bouteille, la bonne transparence d'un récipient avant son remplissage ou les traces qu'il peut avoir et qui nécessitent son évacuation ou encore la présence d'accessoires tels que des étiquettes, un bouchon, une capsule ainsi que de nombreux critères d'aspect, de dimensions, de couleurs, de transparence qui peuvent être le ou les critères à contrôler pour éjecter l'objet qui ne répond pas.

Les objets Ni sont répartis, de préférence mais non obligatoirement, à des intervalles réguliers. Pour les besoins de la description, la figure 1 met en évidence un groupe de trois objets Ni-1, Ni, Ni+1 sur un intervalle 2D entre le centre du premier et du troisième objet Ni-1, Ni+1 de ce triplet pris dans le sens D du défilement. Les deux objets extrêmes de ce triplet sont de part et d'autre d'un objet détecté non conforme (cet objet est mis en évidence par des hachures croisées) et a pour cette raison une référence avec (') N'i. L'objet N'i doit être sorti de la ligne de défilement LD sans que les deux autres objets Ni-1, Ni+1 qui l'encadrent ne le soient.

L'installation 100 comprend un capteur 2 pour détecter les objets Ni, un dispositif d'évacuation 3 pour évacuer les objets non conformes N'i et une unité de commande 4 pour gérer le fonctionnement de l'installation.

Le capteur 2 installé sur la ligne de défilement LD au-dessus ou à cheval de la bande transporteuse 1 comporte :
- un détecteur 21 pour détecter l'objet Ni arrivant dans sa position de référence (ligne de référence 22) par rapport au capteur, et
- un analyseur 25 pour analyser la caractéristique de l'objet Ni et permettre son contrôle de conformité.

L'analyseur 25 peut également être combiné à un analyseur en amont qui aura marqué l'objet par un repère le signalant s'il n'est pas conforme. L'analyseur 25 du capteur se limite alors à détecter ce marquage de l'objet N'i au passage du capteur 2.

L'analyseur 25 contrôle un ou plusieurs critères de conformité de l'objet tels que des paramètres dimensionnels, de forme, d'aspect, de couleur, de transparence, analysés au défilement de l'objet Ni.

Le capteur 2 transmet pour chaque objet Ni un signal d'identité SID-Ni et un signal de qualité SQ-Ni.

Le signal d'identité SID-Ni identifie simplement l'objet par l'instant de son passage de la position de référence (ligne 22) dans le détecteur 21.

Le signal SQ-Ni indique la conformité ou non de l'objet au critère de sélection.

Selon la conception de l'analyseur 25, celui-ci fournit un signal brut non comparé au critère de sélection ou déjà comparé à celui-ci et qui est alors un signal de type binaire.

Le capteur 2 détectant les objets Ni en défilement permet de connaître l'intervalle entre deux objets (Ni, Ni+1), (Ni-1, Ni) et ainsi leur vitesse de défilement si celle-ci est différente de la vitesse constante V.

L'unité de commande 4 gère le fonctionnement de l'installation de sélection 100 à partir des signaux fournis par le capteur 2 pour générer les signaux de commande SCN'i du dispositif d'évacuation 3 pour commander l'évacuation des objets non conformes N'i.

Le dispositif d'évacuation 3, installé sur la ligne de défilement LD des objets Ni, se compose d'un bras 31 porté par un axe 32 ; il décrit une trajectoire circulaire TC qui chevauche la ligne de défilement LD et la bande transporteuse 1 formant une zone d'évacuation 35.

Le bras 31 est entraîné à partir d'une position d'attente à côté de la ligne de défilement LD et de la bande transporteuse 1 pour laisser passer librement les objets Ni conformes. Le bras 31 effectue un mouvement de balayage d'un demi-cercle pour passer dans la zone d'évacuation 35 et pousser l'objet non conforme N'i pour l'évacuer de la ligne de défilement LD sans impacter ni l'objet en amont Ni-1 ni l'objet en aval Ni+1. Par convention, ces références des objets dans le dispositif d'évacuation 3 sont celles des trois objets qui se trouvaient précédemment dans la région du capteur 2.

Le sens de rotation du bras 31 dans la zone d'évacuation 35 correspond à la direction D du défilement des objets Ni avec une composante de vitesse dans cette direction qui est au moins égale à celle de la vitesse de défilement et une composante transversale pour évacuer l'objet N'i. Le mouvement du bras pivotant 31 est commandé par le signal SCN'i de l'unité de commande 4. Ce signal commande le mouvement du bras 31 au moment de l'arrivée de l'objet N'i dans la zone d'évacuation 35, de préférence aussitôt que possible, de façon à réduire la longueur nécessaire du bras 31 et son incursion en profondeur dans la ligne de défilement LD pour permettre d'évacuer un objet N'i entre deux objets Ni-1, Ni+1 rapprochés. Cela permet une répartition dense des objets Ni sur la ligne de défilement LD.

Le signal de commande SCN'i associé à l'objet N'i non conforme tient compte de la distance DP que doit parcourir l'objet N'i entre sa position détectée 22 par le capteur 2 et la zone d'évacuation 35 dans le dispositif d'évacuation 3, à la vitesse de déplacement détectée.

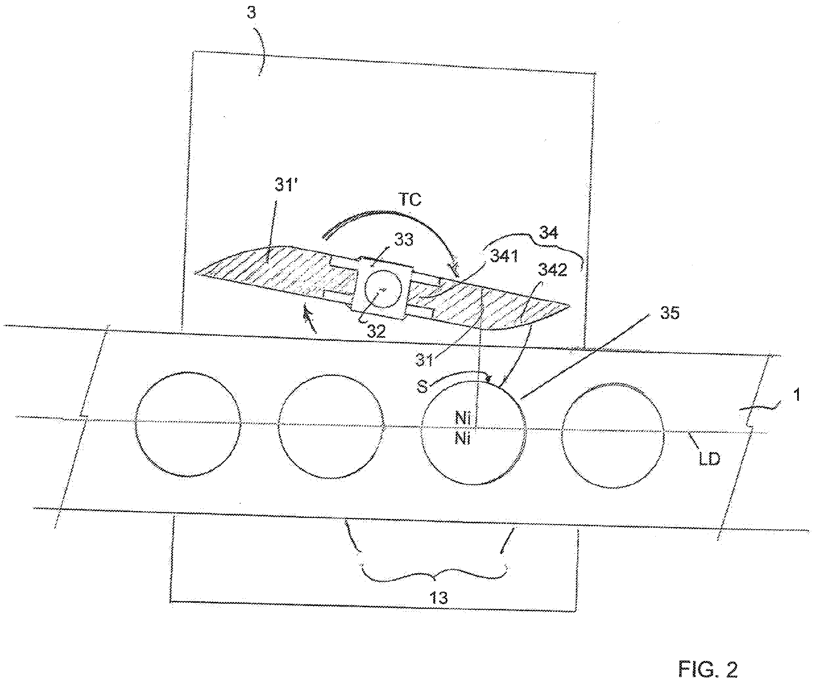

Selon la figure 2, le bras 31 est de préférence doublé d'un autre bras 31', diamétralement opposé, équilibrant l'ensemble pivotant et permettant de réduire la course d'évacuation à un demi-tour entre une position d'attente face à la ligne de défilement LD et une position de repos après une course d'éjection.

Par convention, dans sa position d'attente, le bras porte la référence 31 et dans sa position de repos, la référence 31'.

La figure 2 étant une vue de dessus, la bande transporteuse 1 est en général horizontale et l'axe 32 du bras 31 est un axe vertical. Le moteur commandé entraînant l'axe n'est pas figuré.

La paire de bras tournants 31, 31' est formée d'un support 33 porté par l'axe 32 et auquel sont fixés deux organes d'éjection 34 de forme globalement trapézoïdale ayant une extrémité de fixation 341 et une extrémité active avec une surface d'appui courbe 342 pour pousser l'objet N'i.

Pour ne pas compliquer la description de la paire de bras, on a utilisé, comme indiqué ci-dessus, les références 31, 31' pour désigner les deux bras qui sont de forme identique. La référence 31 est attachée au bras dans sa position d'attente et dans son mouvement d'évacuation de l'objet N'i. La référence 31' est utilisée pour le bras en position de repos.

Les bras prennent alternativement l'une et l'autre position.

Les organes d'éjection 34 sont de préférence des éléments en matière plastique à faible coefficient de frottement comme le PTFE, ayant aussi des caractéristiques d'amortissement avantageuses pour le contact avec l'objet N'i. Ces organes d'éjection 34 sont fixés de manière amovible au support 33 pour permettre leur remplacement.

La section courbe de la surface d'appui 342 s'adapte à des objets Ni, de contour arrondi ou circulaire et de différentes dimensions, qui peuvent passer sur la ligne de défilement LD. Cette forme arrondie est également avantageuse si l'objet a une section polygonale, par exemple rectangulaire ou carrée. La rencontre de la surface d'appui 342 avec le contour de l'objet N'i doit être aussi proche que possible du « sommet » de l'objet N'i. Selon la présente description, par convention, le sommet S d'un objet est la région de l'objet la plus éloignée de la ligne de défilement LD prise comme référence et du côté du dispositif d'évacuation 3. Dans le cas d'un objet de section circulaire ou elliptique, le sommet S, géométrique, est l'intersection de la perpendiculaire à la ligne de défilement LD passant par le centre de l'objet avec son contour circulaire (ou arrondi). Dans le cas d'un objet polygonal, on procédera par analogie en utilisant le cercle circonscrit pour définir la région du sommet.

Ainsi et très schématiquement, la direction de l'impulsion d'éjection communiquée par la surface d'appui 342 à l'objet N'i reste toujours bien orientée dans la zone d'évacuation 35 vers le réceptacle 13, ce qui évite que l'objet N'i à éjecter ne bouscule l'objet Ni-1 qui est en amont sur la ligne de défilement LD.

La courbure de la surface d'appui 342 permet non seulement de mieux s'adapter à différentes dimensions des objets (sans avoir à changer le bras ou l'organe d'éjection) mais aussi à mieux accompagner le mouvement de l'objet N'i dans la zone d'évacuation 35 vers le réceptacle 13 sur le court parcours de contact entre le bras 31/ surface d'appui 342 et l'objet N'i. Cela est d'autant plus important que selon l'invention, le bras 31 avec sa surface d'appui 342 doit être court pour permettre de rapprocher les objets Ni sur la ligne de défilement LD.

La région d'impact de la surface d'appui 342 avec l'objet N'i est fixée par le signal de commande SCN'i fourni par l'unité de commande 4. Ce signal tient compte de la forme de l'objet N'i, de la distance DP à parcourir pour arriver à la zone d'évacuation 35 et de la vitesse (temps de réaction) du bras 31.

Sur la dernière partie de la trajectoire en demi-cercle, le bras 31 n'est plus en contact avec l'objet N'i et circule dans l'intervalle entre les objets Ni-1, Ni+1 en précédant l'objet Ni+1 grâce à sa composante de vitesse dans la direction D qui est supérieure à celle de l'objet Ni+1.

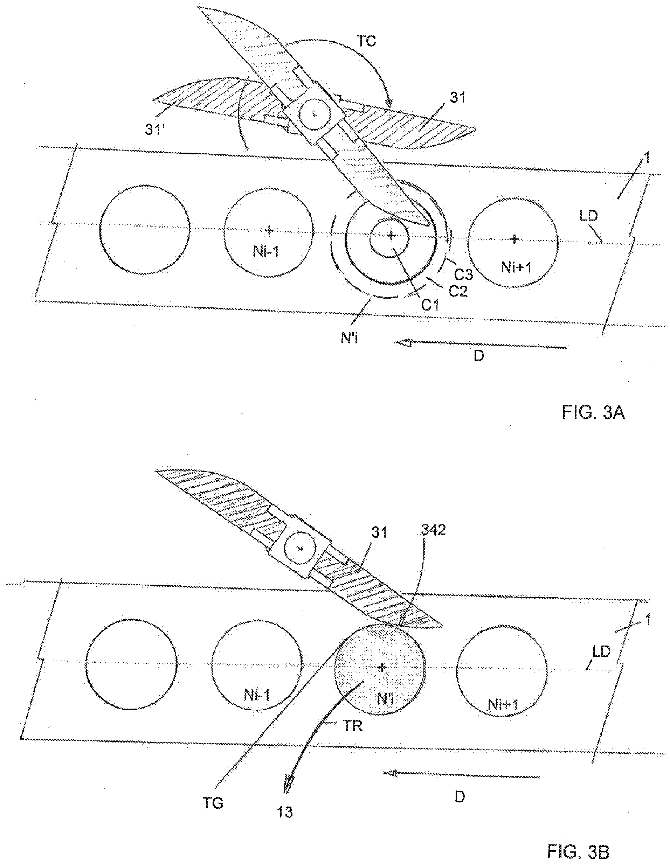

La figure 3A montre l'application du dispositif à trois objets de dimensions différentes figurés par des cercles de tailles différentes, C1, C2, C3 montrant que la surface d'appui 342, bombée, impacte l'objet N'i pour son évacuation sans risquer de le pousser contre l'objet Ni-1 directement en amont. Grâce à sa courbure, la surface d'appui 342 rencontre toujours le contour de l'objet quel que soit son diamètre C1-C3, allant d'un petit diamètre C1 à un grand diamètre C3, toujours près du « sommet » et qui lui applique une composante de poussée fortement orientée dans la direction transversale.

La figure 3B montre schématiquement le mouvement d'éjection par le contact du bras 31 avec l'objet N'i, mettant en évidence la trajectoire transversale de l'objet N'i vers le réceptacle 13.

Très schématiquement, à l'instant du contact de la surface d'appui 342 avec l'objet N'i, la direction de la poussée P est plus fortement inclinée par rapport à la ligne de défilement LD constituant une ligne de référence que la ligne de tangence TG commune aux contours des objets Ni-1, N'i de sorte que l'objet N'i ne risque pas d'être poussé contre l'objet Ni-1 en amont. Ce dessin suppose que le défilement de la bande 1 soit arrêté à ce moment du contact. En réalité, la bande 1 défile (direction D) et le contact entre l'objet N'i et la surface d'appui 342 se rapproche du « sommet » S de l'objet et la direction de poussée P devient de plus en plus perpendiculaire à la ligne de défilement LD de sorte que la trajectoire TR de l'objet N'i s'incurve plus encore.

### NOMENCLATURE

- 100: Installation de sélection d'objets
- 1: Bande transporteuse
11 Entrée
12 Sortie
13 Réceptacle
- 2: Capteur
21 Détecteur
22 Ligne de détection
25 Analyseur
- 3: Dispositif d'évacuation
31,31' Bras tournant/autre bras
32 Axe
33 Support
34 Organe d'éjection
341 Extrémité de fixation
342 Surface d'appui
35 Zone d'évacuation
- 4: Unité de commande

- LD: Ligne de défilement
- D: Direction de défilement
- V: Vitesse de défilement
- 2D: Ecartement
- DP: Distance à parcourir
- TC: Trajectoire circulaire
- Ni: Objet
- N'i: Objet à évacuer
- SID-Ni: Signal d'identité
- SQ-Ni: Signal de qualité
- SCN'i: Signal de commande
- TR: Trajectoire de l'objet évacué

## Revendications

1. Installation de sélection d'objets défilant sur une ligne de transfert constituée par une bande sans fin (1) entre une entrée (11) d'objets et une sortie d'objets (12), acceptés, avec rejet d'objets (N'i) non conformes dans la zone d'évacuation (35) comprenant :
- un dispositif éjecteur (3) à bras pivotants dont la trajectoire chevauche la trajectoire des objets,
installation **caractérisée en ce que**
- le dispositif éjecteur (3) est formé :
- de deux bras (31) pivotants, entraînés, dont la trajectoire de rotation chevauche la ligne de défilement (LD) des objets (Ni) dans la zone d'évacuation (35), les deux bras étant diamétralement opposés, terminés chacun par une surface d'appui bombée (342),
- le sens de rotation du bras (31) dans la zone d'évacuation (35) correspond à la direction de défilement des objets (Ni) avec une composante de vitesse dans cette direction au moins égale à la vitesse de défilement et une composante transversale pour évacuer l'objet, pour accompagner rapidement et avec ménagement l'objet à évacuer sans perturber l'objet en amont par la poussée de l'objet à évacuer, ni l'objet en aval par sa rencontre avec le bras pivotant
- le bras entraîné (31) recevant un signal de commande (SCN'i) de l'objet (N'i) à éjecter pour impacter cet objet qui arrive dans la zone d'évacuation (35) et l'évacuer de la ligne de défilement (LD).

2. Installation selon la revendication 1,
**caractérisée en ce que**
la bande transporteuse (1) est horizontale et l'axe (32) du bras (31) est un axe vertical.

3. Installation selon les revendications 1 à 2,
**caractérisée en ce que**
le bras (31) est entraîné à partir d'une position d'attente à côté de la ligne de défilement (LD) et de la bande transporteuse (1) pour laisser passer librement les objets (Ni) conformes, le bras (31) effectuant un mouvement de balayage d'un demi-cercle pour passer dans la zone d'évacuation (35) et pousser l'objet non conforme (N'i) pour l'évacuer de la ligne de défilement (LD) sans impacter ni l'objet en amont (Ni-1), ni l'objet en aval (Ni+1).

4. Installation selon la revendication 1,
**caractérisée en ce que**
le dispositif d'éjection (3) comprend deux bras (31, 31) diamétralement opposés, portés par un axe (32) et terminé chacun par une surface d'appui (342) bombée pour entrer en contact avec l'objet (N'i) à évacuer.

5. Installation selon les revendications 1 à 4,
**caractérisée en ce que**
chaque bras (31, 31') est composé d'un organe d'éjection (34) fixé par une extrémité (341) à un support (33) porté par l'axe (32), l'autre extrémité ayant la surface d'appui (342) bombée.

6. Installation selon la revendication 5,
**caractérisée en ce que**
l'organe d'éjection (34) est une pièce en matière plastique, notamment en PTFE.

7. Installation selon la revendication 1,
**caractérisée en ce qu'**elle comprend :
- un capteur (2)
* installé sur la ligne de défilement (LD) des objets (Ni),
* générant un signal d'identité (SID-Ni) de l'objet (Ni) au moment du passage de l'objet (Ni) dans la zone de détection (22) du capteur (2), et
* un signal de qualité (SQ-Ni) de l'objet (Ni) résultant de l'analyse de l'objet (Ni),
- une unité de commande (4)
* recevant les signaux d'identité (SID-Ni) et de qualité (SQ-Ni) de chaque objet (Ni),
* générant un signal de commande (SCN'i) si le signal de qualité (SQ-Ni) de l'objet (Ni) n'est pas conforme au critère imposé,
** ce signal de commande (SCN'i) tenant compte de la vitesse de circulation de l'objet jusqu'à la zone d'éjection (35).

## Patentansprüche

1. Anlage zum Auswählen von Objekten, die sich entlang einer Transportlinie bewegen, die aus einem Endlosband (1) zwischen einem Einlass (11) für Objekte und einem Auslass (12) für akzeptierte Objekte besteht, mit Aussortierung nicht konformer Objekte (N'i) im Auswurfbereich (35), umfassend:
eine Ausstoßvorrichtung (3) mit Schwenkarmen, deren Laufbahn sich mit der Laufbahn der Gegenstände überschneidet,
wobei die Anlage **dadurch gekennzeichnet ist, dass** die Ausstoßvorrichtung (3) ausgebildet ist:
aus zwei schwenkbaren, angetriebenen Armen (31), deren Rotationsbahn sich mit der Lauflinie (LD) der Objekte (Ni) im Auswurfbereich (35) überschneidet, wobei die beiden Arme einander diametral gegenüberliegen und jeweils in einer gewölbten Auflagefläche (342) enden,
die Drehrichtung des Arms (31) im Auswurfbereich (35) der Förderrichtung der Objekte (Ni) mit einer Geschwindigkeitskomponente in dieser Richtung entspricht, die mindestens gleich der Fördergeschwindigkeit ist, und einer Querkomponente zum Auswerfen des Objekts, um das auszuwerfende Objekt schnell und schonend zu begleiten, ohne das stromaufwärts liegende Objekt durch den Schub des auszuwerfenden Objekts oder das stromabwärts liegende Objekt durch den Kontakt mit dem Schwenkarm zu beeinträchtigen,
wobei der angetriebene Arm (31) ein Steuersignal (SCN'i) von dem auszustoßenden Objekt (N'i) empfängt, um auf das Objekt einzuwirken, das im Auswurfbereich (35) ankommt, und es von der Lauflinie (LD) auszuwerfen.

2. Anlage nach Anspruch 1,
**dadurch gekennzeichnet, dass**
das Förderband (1) horizontal ist und die Achse (32) des Arms (31) eine vertikale Achse ist.

3. Anlage nach den Ansprüchen 1 bis 2,
**dadurch gekennzeichnet, dass**
der Arm (31) aus einer Warteposition neben der Lauflinie (LD) und dem Förderband (1) angetrieben ist, um den konformen Objekten (Ni) freien Durchgang zu ermöglichen, wobei der Arm (31) eine halbkreisförmige Schwenkbewegung ausführt, um im Auswurfbereich (35) zu gelangen und das nicht konforme Objekt (N'i) aus der Lauflinie (LD) auszustoßen, ohne dabei auf das stromaufwärts liegende Objekt (Ni-1) oder auf das stromabwärts liegende Objekt (Ni+1) einzuwirken.

4. Anlage nach Anspruch 1,
**dadurch gekennzeichnet, dass**
die Ausstoßvorrichtung (3) zwei diametral gegenüberliegenden Armen (31, 31') umfasst, die von einer Achse (32) getragen werden und jeweils in einer gewölbten Auflagefläche (342) enden, um mit dem auszuwerfenden Objekt (N'i) in Kontakt zu kommen.

5. Anlage nach den Ansprüchen 1 bis 4,
**dadurch gekennzeichnet, dass**
jeder Arm (31, 31') aus einem Ausstoßelement (34) besteht, das mit einem Ende (341) an einer von der Achse (32) getragenen Halterung (33) befestigt ist, wobei das andere Ende die gewölbte Auflagefläche (342) aufweist.

6. Anlage nach Anspruch 5,
**dadurch gekennzeichnet, dass**
das Ausstoßelement (34) ein Bauteil aus Kunststoff, insbesondere aus PTFE, ist.

7. Anlage nach Anspruch 1,
**dadurch gekennzeichnet, dass** sie:
ein Sensor (2), der
* auf der Lauflinie (LD) der Objekten (Ni) installiert ist,
* ein Identitätssignal (SID-Ni) des Objekts (Ni) im Moment des Durchgangs des Objekts (Ni) im Erfassungsbereich (22) des Sensors (2) erzeugt, und
* ein Qualitätssignal (SQ-Ni) des Objekts (Ni) erzeugt, das sich aus der Analyse des Objekts (Ni) ergibt,
eine Steuereinheit (4), die
* die Identitäts- (SID-Ni) und Qualitätssignale (SQ-Ni) jedes Objekts (Ni) empfängt,
* ein Steuersignal (SCN'i) erzeugt, wenn das Qualitätssignal (SQ-Ni) des Objekts (Ni) nicht dem vorgegebenen Kriterium entspricht,
** wobei dieses Steuersignal (SCN'i) die Bewegungsgeschwindigkeit des Objekts bis zum Ausstoßbereich (35) berücksichtigt, umfasst.

## Claims

1. Installation for selecting objects moving on a transfer line which is constituted by a continuous belt (1) between an inlet (11) for objects and an outlet (12) for objects which are accepted with non-compliant objects (N'i) being rejected in the discharge zone (35) comprising:
- an ejection device (3) with pivoting arms, the trajectory of which overlaps the trajectory of the objects,
which installation is **characterised in that**
- the ejection device (3) is formed:
- by two driven pivoting arms (31), the rotational trajectory of which overlaps the movement line (LD) of the objects (Ni) in the discharge zone (35), the two arms being diametrically opposed, each one being terminated by a curved abutment surface (342),
- the rotation direction of the arm (31) in the discharge zone (35) corresponds to the movement direction of the objects (Ni) with a speed component in this direction at least equal to the movement speed and a transverse component for discharging the object, in order to accompany rapidly and carefully the object to be discharged without disturbing the object upstream by pushing the object to be discharged, nor the object downstream as a result of it being touched by the pivoting arm,
- the driven arm (31) receiving a control signal (SCN'i) of the object (N'i) to be ejected in order to impact this object which arrives in the discharge zone (35) and to discharge it from the movement line (LD).

2. Installation according to claim 1,
**characterised in that**
the transport belt (1) is horizontal and the axle (32) of the arm (31) is a vertical axis.

3. Installation according to claim 1 and claim 2,
**characterised in that**
the arm (31) is driven from a waiting position beside the movement line (LD) and the transport belt (1) in order to allow compliant objects (Ni) to pass freely, the arm (31) carrying out a scanning movement in a semi-circle in order to pass into the discharge zone (35) and to push the non-compliant object (N'i) in order to discharge it from the movement line (LD) without impacting either the upstream object (Ni-1) or the downstream object (Ni+1).

4. Installation according to claim 1,
**characterised in that**
the ejection device (3) comprises two arms (31, 31') which are diametrically opposed and which are carried by an axle (32) and which are each terminated by a curved abutment surface (342) in order to come into contact with the object (N'i) to be discharged.

5. Installation according to claims 1 to 4,
**characterised in that**
each arm (31, 31') is composed of an ejection member (34) which is fixed by one end (341) to a support (33) which is carried by the axle (32), the other end having the curved abutment surface (342).

6. Installation according to claim 5,
**characterised in that**
the ejection member (34) is a component made of plastics material, in particular of PTFE.

7. Installation according to claim 1,
**characterised in that** it comprises:
- a sensor (2)
* which is installed on the movement line (LD) of the objects (Ni),
* and which generates an identity signal (SID-Ni) of the object (NI) at the time at which the object (Ni) moves into the detection zone (22) of the sensor (2), and
* a quality signal (SQ-Ni) of the object (Ni) resulting from the analysis of the object (Ni),
- a control unit (4)
* which receives the identity signal (SID-Ni) and quality signal (SQ-Ni) of each object (Ni),
- generating a control signal (SCN'i) if the quality signal (SQ-Ni) of the object (Ni) is not compliant with the criterion imposed,
** this control signal (SCN'i) taking into account the travel speed of the object as far as the discharge zone (35).
